# EUROPEAN PATENT APPLICATION

(11) **EP 4 764 705 A1**
(43) Date of publication of application: **24.06.2026**
(21) Application number: 25213294.9
(22) Date of filing: 04.11.2025
(51) Int. Cl.: G03G 15/00, G03G 21/16

(54) **IMAGE FORMING APPARATUS**

(30) Priority: 20.12.2024 JP 2024225635
(71) Applicant: ETRIA Co., Ltd., Yokohama, Kanagawa 220-0011 (JP)
(72) Inventor: SUZUKI, Tatsuya, Yokohama, 220-0011 (JP)
(74) Representative: J A Kemp LLP

(57) **Abstract**

An image forming apparatus (1) includes an apparatus body (100), an image forming device (10), and a document reading device (200). The document reading device (200) includes a feed tray (210) that place the document before reading, a document reader (220) that reads the document fed from the feed tray (210), an ejection port (229) that ejects the document read by the document reader (220), and an ejection tray (230) that places the document. The document reader (220) is disposed between the feed tray (210) and the ejection tray (230). The ejection port (229) is disposed between the document reader (220) and the ejection tray (230), and closer to a center of the apparatus body (100) than both ends of the apparatus body (100). At least a part of the ejection tray (230) is overlapped with the apparatus body (100) in a vertical direction orthogonal to a horizontal direction.

## Description

### BACKGROUND

### Technical Field

The present disclosure relates to an image forming apparatus.

### Related Art

An image forming apparatus is known that includes an apparatus body and a document reading device on an upper portion of the apparatus body. The apparatus body includes an image forming device that forms an image on a medium, and the document reading device reads a document. For example, in an image forming apparatus described in Japanese Unexamined Patent Application Publication No. 2010-119080, a document reading device includes a feed tray, a document reader, and an ejection tray arranged in this order in a horizontal direction when viewed from the front of the image forming apparatus.

However, in the image forming apparatus described in Japanese Unexamined Patent Application Publication No. 2010-119080, the ejection tray on which the document ejected from the ejection port of the document reader is placed largely protrudes outward from a body of the image forming apparatus in the horizontal direction when viewed from the front of the image forming apparatus. Accordingly, the machine occupation dimension in the horizontal direction during operation increases.

### SUMMARY

An object of the present disclosure is to reduce a machine occupation dimension in the horizontal direction when viewed from the front of an image forming apparatus during operation, as compared with the comparative example.

The present disclosure described herein provides an image forming apparatus that includes an apparatus body, an image forming device, and a document reading device. The image forming device is in the apparatus body and forms an image on a medium. The document reading device reads a document in the apparatus body and includes a feed tray that place the document before reading, a document reader that reads the document fed from the feed tray, an ejection port that ejects the document read by the document reader from the document reader, and an ejection tray that places the document ejected from the ejection port. The document reader is disposed between the feed tray and the ejection tray in a horizontal direction in a front view of the apparatus body. The ejection port is disposed between the document reader and the ejection tray in the horizontal direction, and closer to a center of the apparatus body than both ends of the apparatus body in the horizontal direction in the front view. At least a part of the ejection tray is overlapped with the apparatus body in a vertical direction orthogonal to the horizontal direction.

According to one aspect of the present disclosure, the machine occupation dimension in the horizontal direction as viewed from the front of the image forming apparatus during operation can be reduced as compared with the comparative example.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a front view of a copier;
FIGS. 2A and 2B are schematic views of a manual feed tray and an opening-and-closing cover of the copier;
FIG. 3 is a front view of a document reading device of the copier;
FIG. 4 is a front view of parts of the document reading device;
FIG. 5 is a diagram illustrating a positional relation between a document ejection tray of the document reading device and an in-body ejection unit;
FIG. 6 is another diagram illustrating a positional relation between the document ejection tray and the in-body ejection unit;
FIG. 7 is a diagram illustrating a positional relation between an ejection port of the document reading device and an in-body ejection unit; and
FIG. 8 is a diagram illustrating a positional relation between a feed tray of the document reading device and a manual feed tray.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. Identical reference numerals are assigned to identical or equivalent components and a description of those components may be simplified or omitted. As used herein, the singular forms "a," "an," and "the" are intended to include the plural forms as well, unless the context clearly indicates otherwise.

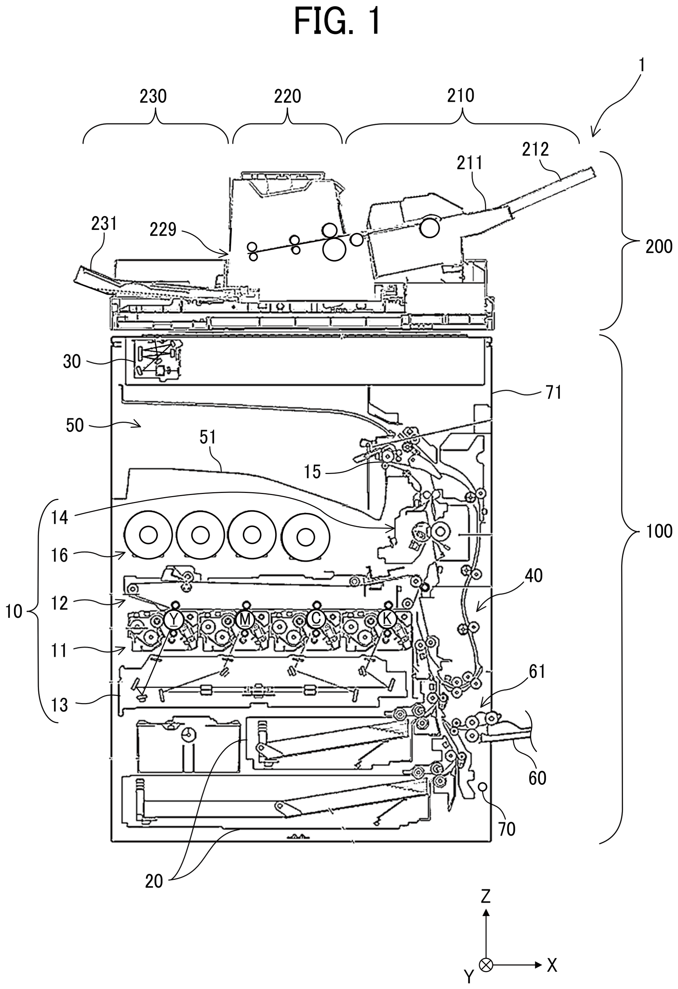

A description is given below of a copier as an image forming apparatus. FIG. 1 is a front view of the copier 1. The copier 1 includes a copier body 100, which is an apparatus body, including an image forming device that forms an image on a medium, and a document reading device 200 that is disposed on the copier body 100 to read a document. In FIG. 1, an X-direction is a horizontal direction (a left-and-right direction or a width direction) when viewed from the front of the copier 1, a Y-direction is a depth direction of the copier 1, and a Z-direction is a vertical direction. First, a description is given of an example of an internal structure of the copier body 100 and the document reading device 200.

An image forming device 10 is disposed in the copier body 100. The copier body 100 further includes a sheet feeding unit 20, a scanner 30, and a sheet reversing unit 40.

The image forming device 10 includes four process cartridges 11 (Y, M, C, and K), an intermediate transfer belt 12, an optical writing unit 13, a fixing device 14, and an ejection roller pair 15. The image forming device 10 includes a so-called in-body ejection unit 50, which has a front side and a left side opened to the outside and on which recorded sheets ejected from the ejection roller pair 15 are stacked, between the image forming device 10 and the scanner 30.

The intermediate transfer belt 12 is an intermediate transferor that is stretched by a plurality of stretching rollers and moves in a counterclockwise direction in FIG. 1.
Reference signs Y, M, C, and K of the four process cartridges 11 indicate photoconductors for yellow, magenta, cyan, and black. The four process cartridges 11 have substantially the same configurations except that the toner colors used therein are different from each other.

The process cartridge 11 has a unit structure in which, for example, a charger and a developing device are integrally supported around a photoconductor serving as a latent image bearer.

The optical writing unit 13 forms an electrostatic latent image on the photoconductor based on image data of a document image read by the scanner 30 or the document reading device 200 or image data input from an external device such as a personal computer. The electrostatic latent images are developed into toner images by the developing devices, and the toner images are superimposed on the intermediate transfer belt 12 to form a full-color image on the intermediate transfer belt 12.

The scanner 30 reads image data while scanning a document placed on an exposure glass disposed in an upper portion of the copier body 100 in the left-and-right direction. The document reading device 200 is attached to the copier body 100 to be openable and closable by swinging around a rotation shaft extending in the left-and-right direction on the back side of the copier body 100 to open and close on the exposure glass. In the case where the copier body 100 forms an image using the image data of the document image read by the document reading device 200, the scanner 30 can be omitted.

The full-color image on the intermediate transfer belt 12 is transferred onto a transfer sheet, which is the medium fed and conveyed from the sheet feeding unit 20. The transfer sheet on which the full-color image has been transferred is heated and pressed in the fixing device 14 to fix the full-color image, and the transfer sheet on which the image has been fixed is ejected from an ejection port (formed in a wall) by the ejection roller pair 15. The transfer sheets ejected from the ejection port are stacked on an ejected sheet tray 51 disposed in the in-body ejection unit 50.

In the copier body 100 of FIG. 1, toner bottles 16 containing the respective color toners are disposed above the intermediate transfer belt 12 to be attachable to and detachable from the copier body 100. A manual feed tray 60 that can be opened and closed is disposed on the right side of the copier body 100, and a sheet feeder 61 that feeds the transfer sheet on the manual feed tray 60 is also disposed inside the copier body 100.

A conveying roller, a guide plate, the manual feed tray 60, and the sheet feeder 61, which are included in the sheet reversing unit 40, are held by a rotation shaft 70 disposed at a lower right portion of the copier body 100 in an opening-and-closing cover 71 that is installed to be openable and closable. A user opens the opening-and-closing cover 71 so that a delivery passage from the sheet feeding unit 20 to the ejection roller pair 15 is opened.
Thus, jam processing can be performed.

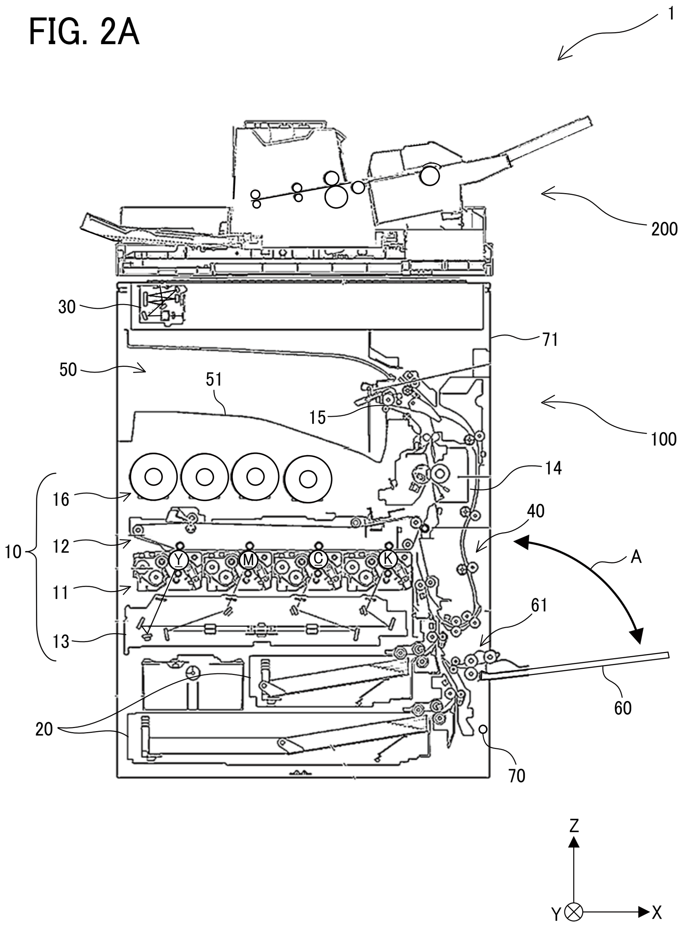

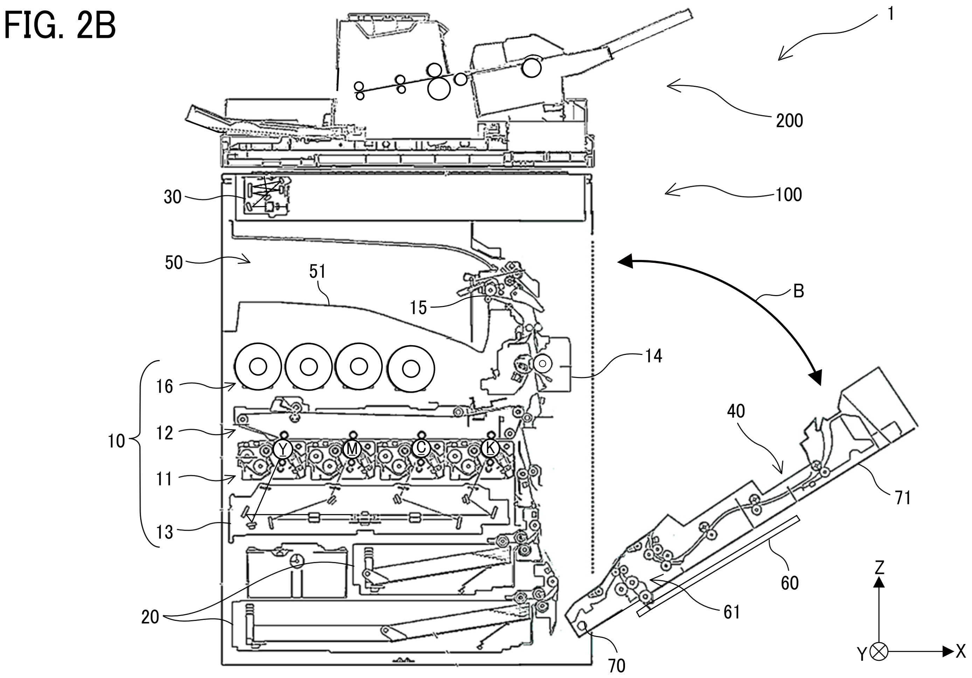

FIG. 2A is a diagram illustrating a state in which the manual feed tray 60 is opened. FIG. 2B is a diagram illustrating a state in which the opening-and-closing cover 71 is opened. The above-described example is an example of the configuration of the copier body 100 in the case where an electrophotographic system is adopted as a recording system. However, instead of this, another recording system such as an inkjet system may be adopted.

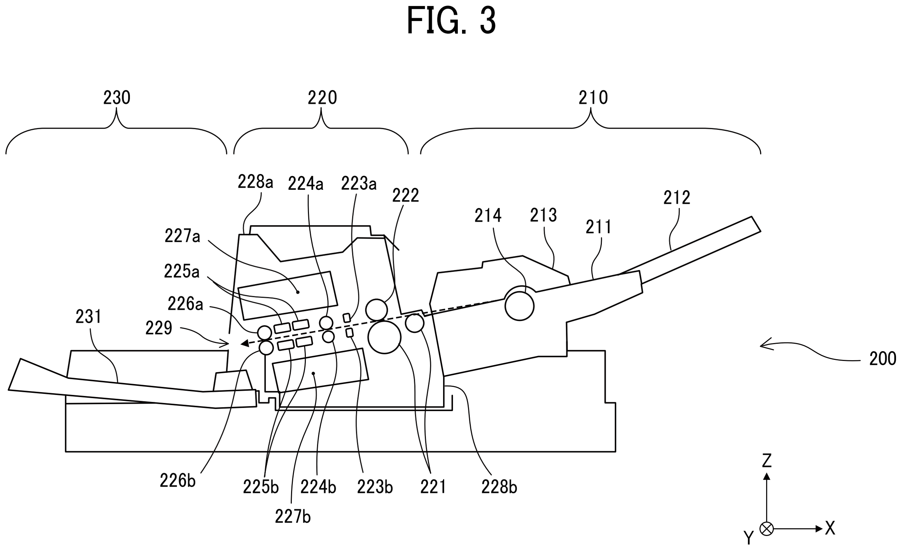

FIG. 3 is a front view illustrating a configuration of the document reading device 200. The document reading device 200 includes a feed tray 210, a document reader 220, and an ejection tray 230. The feed tray 210, the document reader 220, and the ejection tray 230 are arranged in this order in the horizontal direction when viewed from the front of the image forming apparatus. The document conveyance passage is a so-called straight passage.

The feed tray 210 includes a document table 211 and a drawable document table 212 that can be pulled out from and stored in the document table 211. Instead of the pulling-out and storing configuration, a swing shaft may be disposed at the right end of the document table 211 in FIG. 3 so that a document table 211 can be folded and extended. The document table 211 includes a shoot roller 214 that contacts the lower surface of the document to apply a conveyance force.

In the document reader 220, pick rollers 221, a brake roller 222, document detection sensors 223 (document detection sensors 223a and 223b), a conveying roller pair 224 (a drive roller 224a and a driven roller 224b), lighting devices 225 (a back-side lighting device 225a and a front-side lighting device 225b) including light-emitting diodes (LEDs), and an ejection roller pair 226 (ejection rollers 226a and 226b) are arranged along a conveyance passage (indicated by a dashed line in FIG. 3) along which a document from the feed tray 210 is conveyed. The document reader 220 includes a back-side reading optical device 227a and a front-side reading optical device 227b.

The document reader 220 includes an upper housing 228a and a lower housing 228b with a conveyance passage interposed therebetween. The lower housing 228b supports the upper housing 228a in an openable and closable manner. A lower surface of the upper housing 228a forms an upper guide of the conveyance passage of the document. An upper surface of the lower housing 228b forms a lower guide of the conveyance passage of the document.

The ejection tray 230 includes a document ejection tray 231.

The document placed on the document table 211 (the lowermost document in the case where two or more documents are placed) is conveyed between the upper guide and the lower guide in a document conveyance direction from right to left in FIG. 3 by the rotation of the shoot roller 214 and the pick rollers 221. In a case where multiple documents are placed on the document table 211, a document that contacts the pick rollers 221 among the multiple documents placed on the document table 211 is separated by the brake roller 222.

The document is fed between the drive roller 224a and the driven roller 224b of the conveying roller pair 224 while being guided by the upper guide and the lower guide. The document is fed between the back-side lighting device 225a and the front-side lighting device 225b by the rotation of the conveying roller pair 224. The back side and the front side of the document are read by the back-side reading optical device 227a and the front-side reading optical device 227b, respectively. The read document is ejected onto the document ejection tray 231 through an ejection port 229 by the rotation of the ejection roller pair 226 (the ejection rollers 226a and 226b).

The document reading device 200 has a straight reading passage (straight passage) from the document table 211 to the document ejection tray 231, not a document reversing passage or a U-turn passage. As a result, such a configuration can save the space of the document reading unit and enhance the visibility of the document after reading.

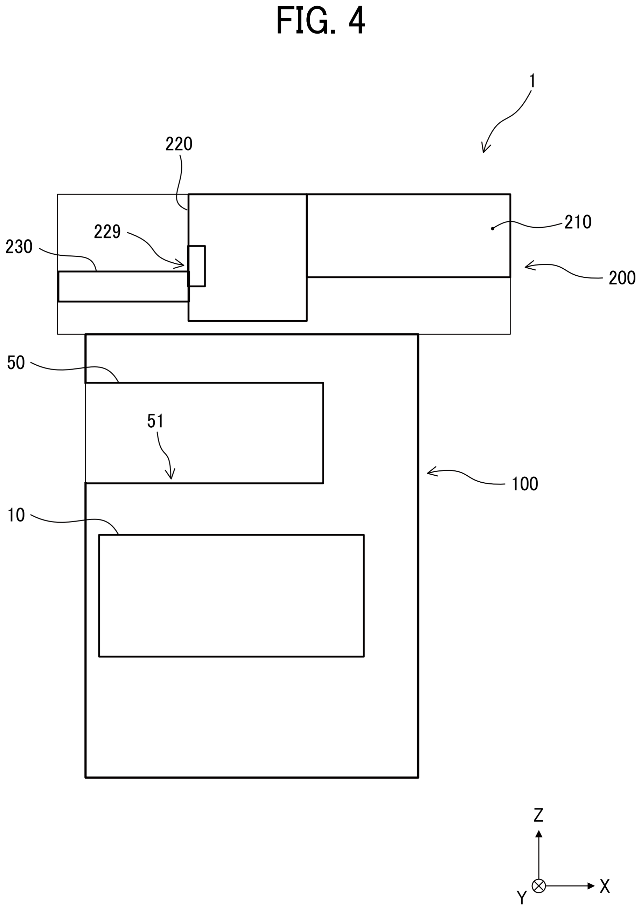

A description is given below of the arrangement of the document reading device 200 according to the present embodiment. FIG. 4 is a front view of the document reading device 200 and parts of the copier body 100, which illustrates the arrangement of the document reading device 200. The feed tray 210, the document reader 220, and the ejection tray 230 of the document reading device 200, and the in-body ejection unit 50 of the copier body 100 are illustrated in FIG. 4. In FIG. 4, the image forming device 10 is included in the copier body 100.

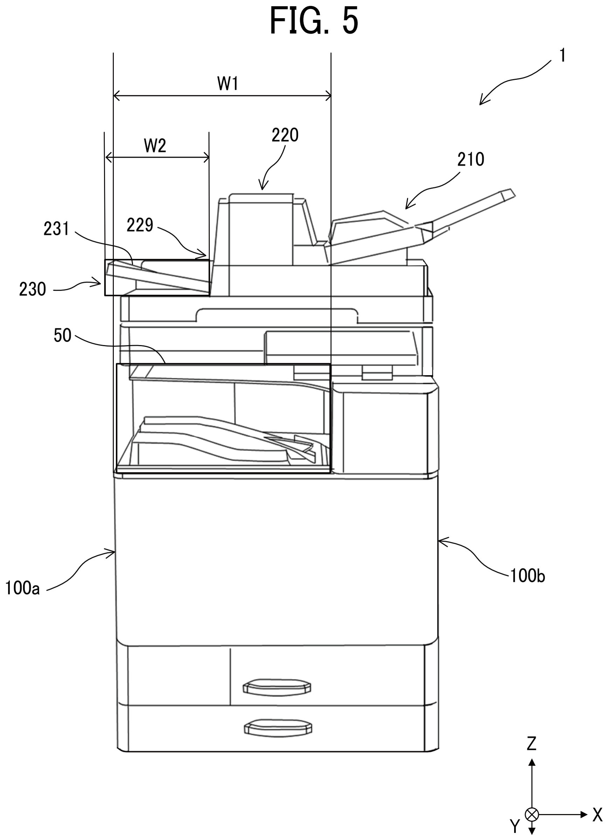

FIG. 5 is an external perspective view of the copier body 100 as viewed from the front and slightly above, illustrating the positional relation between the document ejection tray 231 of the document reading device 200 and the in-body ejection unit 50 of the copier body 100. A reference sign W1 indicates a width region (a region in an X-direction) of the in-body ejection unit 50, the right end of the region W1 is an ejection port formed in the inner wall of the in-body ejection unit 50, and the left end of the region W1 is a left side surface 100a of the copier body 100. A reference sign W2 indicates a width region (a region in an X-direction) of the ejection tray 230, the right end of the region W2 is the ejection port 229 formed in a cover of the document reader 220, and the left end of the region W2 is a leading end of the document ejection tray 231.

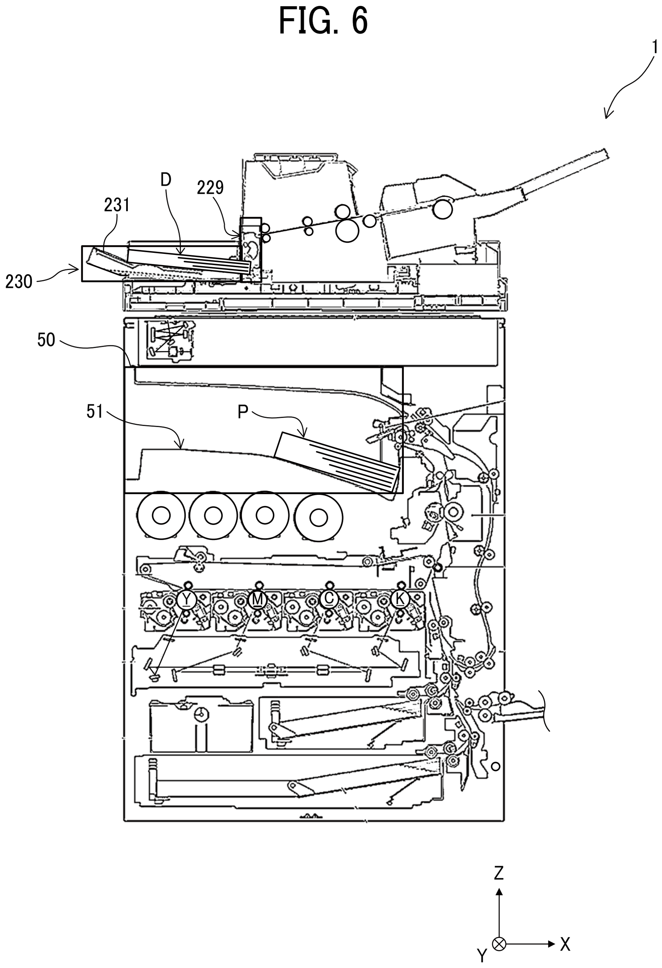

FIG. 6 is a front view of the copier 1, illustrating the positional relation between the original (after reading) and the in-body ejection unit 50 of the copier body 100. A stack of documents D ejected and stacked on the document ejection tray 231 of the ejection tray 230 and a stack of transfer sheets P on which images have been formed and which are stacked on the ejected sheet tray 51 of the in-body ejection unit 50 are illustrated. The in-body ejection unit 50 has a length (the length in the X-direction) that allows an A3-size sheet to be ejected and stored in the longitudinal direction. The transfer sheet bundle P illustrated in FIG. 6 is ejected in the short direction of the size. The document bundle D on the document ejection tray 231 illustrated in FIG. 6 is also ejected in the A4 short direction.

As illustrated in FIGS. 4 to 6, in the present embodiment, in the copier 1 provided with the document reading device 200 that conveys a document in the straight passage, the ejection port 229 is disposed closer to the center portion than both ends in the left-and-right direction (in the X-direction) of the copier body 100, and at least a part of the ejection tray 230 is disposed to overlap the copier body 100 in the vertical direction (in the Z-direction). More specifically, the document ejection tray 231 and the in-body ejection unit 50 of the copier body 100 are in a positional relation in which the document ejection tray 231 and the in-body ejection unit 50 overlap in the vertical direction (in the Z-direction).

Such a configuration can reduce the protrusion amount of the document ejection tray 231 outward from the copier body 100 (from the left side surface 100a) in the left-and-right direction of the copier body 100. As a result, the occupied area of the entire copier 1 including the document reading device 200 in the width direction (in the X-direction) during operation can be reduced.

In the present embodiment, a direction in which a document is conveyed from the feed tray 210 to the ejection tray 230 is the same as the direction in which the transfer sheet is ejected to the in-body ejection unit 50, and the document ejected to the ejection tray 230 overlaps the in-body ejection unit 50. Accordingly, when reading of a document and image formation are performed at a time, the range in which a user moves hands when the transfer sheet ejected to the in-body ejection unit 50 after the image formation and the document after the reading are collected together is reduced. Thus, the usability can be enhanced.

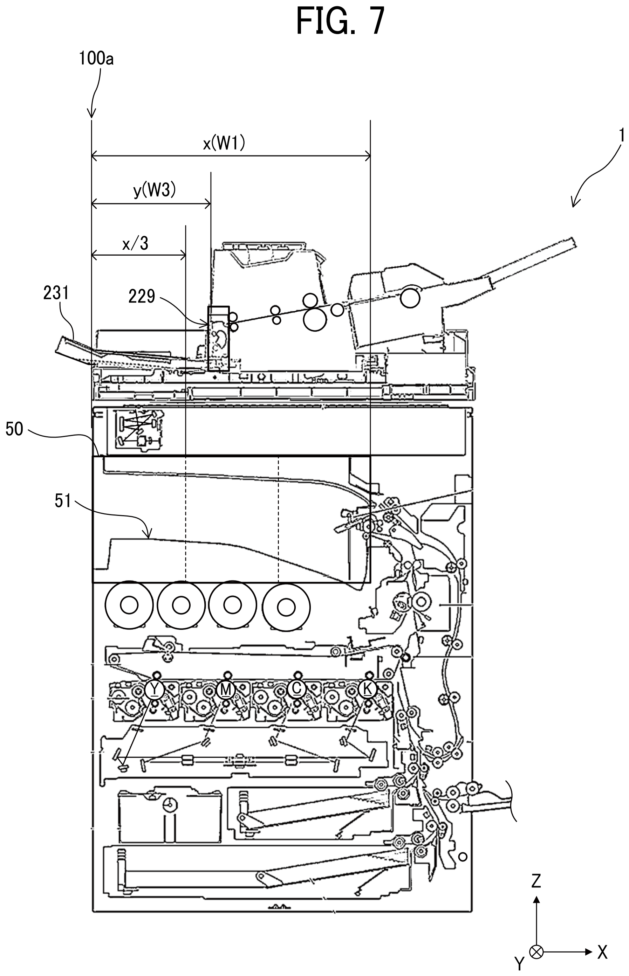

FIG. 7 is a diagram illustrating a positional relation between the ejection port 229 of the document reading device 200 and the in-body ejection unit 50 of the copier body 100. In the copier 1 provided with the document reading device 200 that conveys a document in the straight passage, the ejection port 229 is preferably disposed at a position closer to the center of the copier body 100 by 1/3 or more of the dimension x in the left-and-right direction of the in-body ejection unit 50 from an end in the left-and-right direction of the copier body 100. In FIG. 7, x indicates the dimension of the width region W1 of the in-body ejection unit 50. The reference sign y indicates the distance from the left side surface 100a of the copier body 100 to the ejection port 229. An ejection tray region W3 having the dimension y is a region that overlaps the copier body 100 in the vertical direction (in the Z-direction) in the ejection tray 230. The position shifted by a dimension x/3 from the left side surface 100a of the copier body 100 is indicated by an auxiliary line. The ejection port 229 is disposed at a position closer to the center of the copier body 100 than the above-described position.

Such a configuration can sufficiently reduce the protrusion amount of the document ejection tray 231 outward from the copier body 100 (from the left side surface 100a) in the left-and-right direction of the copier body 100. When the document reading operation and the printing operation are performed at the same timing, the document ejection tray 231 and the in-body ejection unit 50 (particularly, the ejection port) are sufficiently close to each other, so that the travel distance (moving line) between when a user collects the document and when the user collects the transfer sheet after image formation can be reduced. Thus, the collection work can be facilitated.

In the present embodiment, the copier body 100 includes the manual feed tray 60 as a medium tray that can be in a posture protruding from the side wall surface. The feed tray 210 is disposed on the same side as the manual feed tray 60 in the left-and-right direction (in the X-direction). The feed tray 210 protrudes from the side wall surfaces in the left-and-right direction by protrusion amounts smaller than the protrusion amount of the manual feed tray 60 from the copier body 100.

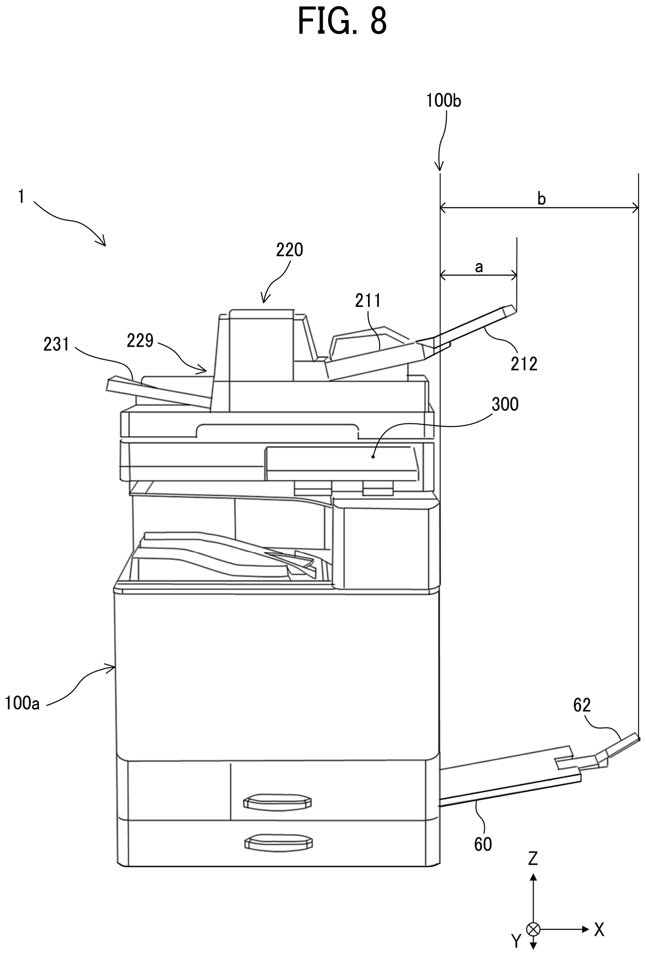

FIG. 8 is a diagram illustrating a positional relation between the feed tray 210 of the document reading device 200 and the manual feed tray 60 of the copier body 100. The feed tray 210 is disposed on the same side as the manual feed tray 60 of the copier body 100. The document table 211 and the drawable document table 212 are arranged so that a protrusion amount a of the entire of the document table 211 and the drawable document table 212 with respect to the copier body 100 is smaller than a protrusion amount b of the manual feed tray 60 (including a drawer tray unit 62 from the leading end of the manual feed tray 60) protruding from the copier body 100. Such a configuration can reduce the area occupied by the entire apparatus including the document reading device 200 in the width direction during operation.

In the present embodiment, as illustrated in FIG. 8, the copier 1 includes an operation panel 300 as an operation unit on which a user performs an operation of determining the reading operation. The operation panel 300 and the feed tray 210 are located at positions shifted to the same side with respect to the copier body 100 in the left-and-right direction. According to this configuration, the distance of movement of a hand is reduced in the user operation of performing the reading operation on the operation panel 300 after the document is placed on the document table 211, and thus the operation can be easier.

The above-described embodiments are illustrative and do not limit the present disclosure. Thus, numerous additional modifications and variations are possible in light of the above teachings. For example, elements and/or features of different illustrative embodiments may be combined with each other and/or substituted for each other within the scope of the present disclosure. The effects obtained by the above-described embodiment are examples. The effects according to the present disclosure are not limited to the above-described effects.

The above-descried configurations are examples and embodiments of the present disclosure are not limited thereto. For example, the following aspects of the present disclosure may have advantageous effects described below. In the description of the aspects, reference signs in parentheses after the names of elements are examples of corresponding members, and are not limited to the examples.

### First Aspect

An image forming apparatus (e.g., the copier 1) includes an apparatus body (e.g., the copier body 100) and a document reading device (e.g., the document reading device 200). The apparatus body includes an image forming device (e.g., the image forming device 10) that forms an image on a medium. The document reading device is disposed on the apparatus body to read a document. The document reading device includes a feed tray (e.g., the feed tray 210), a document reader (e.g., the document reader 220), an ejection port (e.g., the ejection port 229), and an ejection tray (e.g., the ejection tray 230). A document before reading is placed on the feed tray. The ejection port ejects the document from the document reader after the document is read by the document reader. The document ejected from the ejection port is placed on the ejection tray. The feed tray, the document reader, and the ejection tray are arranged in this order in a horizontal direction when viewed from a front of the image forming apparatus. The ejection port is closer to a center of the apparatus body than both ends of the apparatus body in the horizontal direction, and at least a part of the ejection tray is disposed to overlap the apparatus body in a vertical direction. With such a configuration, the machine occupation dimension in the horizontal direction as viewed from the front of the image forming apparatus during operation can be reduced. Having a straight passage also enhances the visibility of the document. The overlapping portion of the apparatus body is a portion of the apparatus body (e.g., the copier body 100) up to a side surface of the apparatus body on the downstream side in the document ejection direction in the document reading device (e.g., the document reading device 200). The side surface of the apparatus body (e.g., the copier body 100) does not include a manual feed tray (e.g., the manual feed tray 60) that temporarily protrudes, for example, takes a protruding posture or a document ejection tray (e.g., the document ejection tray 231) that partially protrudes from the side surface of the apparatus body.

### Second Aspect

In the image forming apparatus (e.g., the copier 1) according to the first aspect, the apparatus body (e.g., the copier body 100) includes an in-body ejection unit (e.g., the in-body ejection unit 50) that has an opening for access from the outside and to which the medium having an image formed thereon is ejected. The ejection tray (e.g., the ejection tray 230) is disposed such that at least a part of the ejection tray and at least a part of a document ejected to the ejection tray overlap the in-body ejection unit in the vertical direction. According to this configuration, a user can reduce the range of the hand movement when reading of the document and image formation are performed at the same time, and usability can be enhanced.

### Third Aspect

In the image forming apparatus (e.g., the copier 1) according to the second aspect, a direction in which the document is conveyed from the feed tray (e.g., the feed tray 210) to the ejection tray (e.g., the ejection tray 230) is the same as a direction in which the medium is ejected to the in-body ejection unit (e.g., the in-body ejection unit 50). According to this configuration, a user can reduce the range of the hand movement when reading of the document and image formation are performed at the same time, and usability can be enhanced.

### Fourth Aspect

In the image forming apparatus (e.g., the copier 1) according to any one of the first to third aspects, the document reading device (e.g., the document reading device 200) does not include a document reverse conveyance passage that reverses and overlaps in a vertical direction. According to this configuration, the space of the document reader (e.g., the document reader 220) can be reduced as compared with the document reading device having the document reverse conveyance passage that is reversed and overlaps in the vertical direction in addition to the straight passage.

### Fifth Aspect

In the image forming apparatus (e.g., the copier 1) according to any one of the first to fourth aspects, the apparatus body (e.g., the copier body 100) includes a medium tray (e.g., the manual feed tray 60) that can take a posture protruding from a side wall surface of the apparatus body. The feed tray (e.g., the feed tray 210) is disposed on the same side as the medium tray in the horizontal direction. According to this configuration, the occupied area during use can be reduced as compared with a case where the feed tray and the medium tray are protruded to the opposite sides with respect to the apparatus body.

### Sixth Aspect

In the image forming apparatus (e.g., the copier 1) according to the fifth aspect, the feed tray (e.g., the feed tray 210) protrudes from the side wall surface of the apparatus body (e.g., the copier body 100) in the horizontal direction by a protrusion amount smaller than a protrusion amount of the medium tray (e.g., the manual feed tray 60). According to this configuration, the protrusion amount of the feed tray is smaller than the protrusion amount of the medium tray, so that the occupied area during use can be further reduced.

### Seventh Aspect

The image forming apparatus (e.g., the copier 1) according to any one of the first to sixth aspects further includes an operation panel (e.g., the operation panel 300) that allows a user to perform an operation for determining a reading operation. The operation panel and the feed tray (e.g., the feed tray 210) are located at positions shifted to the same side with respect to the apparatus body (e.g., the copier body 100) in the horizontal direction. According to this configuration, the distance of movement of a hand is reduced when the reading operation is performed after the document is placed on the feed tray, and thus the operation can be easier.

The above-described embodiments are illustrative and do not limit the present disclosure. Thus, numerous additional modifications and variations are possible in light of the above teachings. For example, elements and/or features of different illustrative embodiments may be combined with each other and/or substituted for each other within the scope of the present disclosure.

## Claims

1. An image forming apparatus (1) comprising:
an apparatus body (100);
an image forming device (10) in the apparatus body (100), the image forming device (10) to form an image on a medium; and
a document reading device (200) to read a document in the apparatus body (100), the document reading device (200) including:
a feed tray (210) to place the document before reading;
a document reader (220) to read the document fed from the feed tray (210);
an ejection port (229) to eject the document read by the document reader (220) from the document reader (220); and
an ejection tray (230) to place the document ejected from the ejection port (229),
wherein the document reader (220) is disposed between the feed tray (210) and the ejection tray (230) in a horizontal direction in a front view of the apparatus body (100),
wherein the ejection port (229) is disposed:
between the document reader (220) and the ejection tray (230) in the horizontal direction; and
closer to a center of the apparatus body (100) than both ends of the apparatus body (100) in the horizontal direction in the front view, and
wherein at least a part of the ejection tray (230) is overlapped with the apparatus body (100) in a vertical direction orthogonal to the horizontal direction.

2. The image forming apparatus (1) according to claim 1,
wherein the apparatus body (100) includes an in-body ejection unit (50) having an opening accessible from outside of the apparatus body (100), the in-body ejection unit (50) to eject the medium having the image formed by the image forming device (10) to the opening, and
wherein said at least the part of the ejection tray (230) is overlapped with the in-body ejection unit (50) in the vertical direction.

3. The image forming apparatus (1) according to claim 2,
wherein the in-body ejection unit (50) ejects the medium in an ejection direction, and
wherein the document reading device (200) conveys the document from the feed tray (210) to the ejection tray (230) in the ejection direction.

4. The image forming apparatus (1) according to any one of claims 1 to 3,
wherein the document reading device (200) includes a straight passage through which the medium passes through the feed tray (210), the document reader (220), and the ejection tray (230) in the horizontal direction.

5. The image forming apparatus (1) according to any one of claims 1 to 4,
wherein the apparatus body (100) includes a medium tray (60) to:
place the medium to be fed to the image forming device (10); and
protrude from a side face of the apparatus body (100), and
wherein the feed tray (210) and the medium tray (60) are disposed on the same side of the apparatus body (100) in the horizontal direction.

6. The image forming apparatus (1) according to claim 5,
wherein the medium tray (60) protrudes from the side face of the apparatus body (100) in the horizontal direction by a first protrusion amount (b), and
wherein the feed tray (210) protrudes from the side face of the apparatus body (100) in the horizontal direction by a second protrusion amount (a) smaller than the first protrusion amount (b) of the medium tray (60).

7. The image forming apparatus (1) according to any one of claims 1 to 6, further comprising an operation panel (300) to receive an instruction of a reading operation performed by the document reading device (200),
wherein the operation panel (300) and the feed tray (210) are shifted to the same side of the apparatus body (100) in the horizontal direction.

8. The image forming apparatus (1) according to claim 2,
wherein the document reading device (200) includes a straight passage through which the medium passes through the feed tray (210), the document reader (220), and the ejection tray (230), in this order, in the horizontal direction, and
wherein the ejection port (229) is disposed at a position closer to the center of the apparatus body (100) by one third or more of a dimension (x) in the horizontal direction of the in-body ejection unit (50) from an end of the apparatus body (100) at the ejection tray (230) side.
